# EUROPÄISCHE PATENTANMELDUNG

(11) **EP 4 417 494 A1**
(43) Veröffentlichungstag der Anmeldung: **21.08.2024**
(21) Anmeldenummer: 24157126.4
(22) Anmeldetag: 12.02.2024
(51) Int. Cl.: B62D 59/04, G05D 1/00

(54) **VERFAHREN ZUM NIVELLIEREN EINES ANHÄNGERS, INSBESONDERE EINES WOHNWAGENS ODER EINES WOHNMOBILS**

(30) Priorität: 15.02.2023 DE 102023103631
(71) Anmelder: Reich Gesellschaft mbH Regel- und Sicherheitstechnik, 35713 Eschenburg (DE)
(72) Erfinder: Bender, Steffen, Eschenburg (DE); Schaurer, Oliver, Oberding (DE); Liska, Mark, Netphen (DE)
(74) Vertreter: Hofstetter, Schurack & Partner

(57) **Zusammenfassung**

Die Erfindung betrifft ein verfahren zum Nivellieren eines Anhängers (10), bei welchem auf einem Bildschirm (34) eines mobilen Endgeräts (32) in einem ersten Bereich (36) des Bildschirms (34) eine Darstellung (38) angezeigt wird, welche eine Ausrichtung des Anhängers (10) relativ zu einer horizontalen Ebene veranschaulicht. Gleichzeitig werden auf dem Bildschirm (34) des mobilen Endgeräts (32) in jeweiligen, neben dem ersten Bereich (36) und nebeneinander angeordneten, berührungsempfindlichen zweiten Bereichen (45a-d) des Bildschirms (34) wenigstens zwei und höchstens vier Bedienelemente (46a-d) als Bedienflächen angezeigt, wobei durch Berühren der zweiten Bereiche (45a-d) durch eine Person ein zum Antreiben des Anhängers (10) ausgebildeter Hilfsantrieb (30) bedienbar ist, wodurch zum Nivellieren des Anhängers (10) der Anhänger (10) antreibbar ist.

## Beschreibung

Die vorliegende Erfindung betrifft ein Verfahren zum Nivellieren eines Anhängers, insbesondere eines Wohnwagens oder eines Wohnmobils.

Die Beliebtheit von Fahrzeugen wie beispielsweise als Anhänger ausgebildeten Wohnmobilen, die für Urlaubs- und Wohnzwecke verwendet werden, nimmt zurzeit sehr stark zu. Personen nutzen diese Fahrzeuge, um ihre Freizeit und ihren Urlaub und somit eine recht lange Zeit darin zu verbringen. Hierzu wird der Anhänger beispielsweise auf einem Parkplatz oder einem Campingplatz abgestellt, wobei der Anhänger auf dem Parkplatz oder Campingplatz eine recht lange Zeit abgestellt bleibt, um darin wohnen zu können. Dabei ist es wünschenswert, dass der Anhänger so gut wie möglich zu nivellieren, das heißt horizontal auszurichten ist. Unter "Nivellieren", was auch als Nivellierung bezeichnet wird, ist insbesondere ein horizontales Ausrichten des Anhängers, insbesondere eines Bodens des Anhängers, zu verstehen, dessen Boden einen auch als Fahrgastzelle oder Fahrgastraum bezeichneten Innenraum des Anhängers in Fahrzeughochrichtung des Anhängers nach unten hin begrenzt. Dabei ist unter dem Nivellieren insbesondere zu verstehen, dass der Anhänger beziehungsweise dessen Boden derart ausgerichtet, das heißt positioniert wird, dass der Anhänger beziehungsweise dessen Boden nicht oder möglichst wenig von der Horizontalen, das heißt von einer horizontalen Ebene, abweicht. Dadurch kann beispielsweise sichergestellt oder gewährleistet werden, dass beispielsweise im Innenraum des Anhängers angeordnete Oberflächen, auf denen Objekte abgestellt und/oder Arbeiten wie beispielsweise Küchenarbeiten verrichtet werden sollen oder können, nicht oder möglichst wenig von der Horizontalen, das heißt von der horizontalen Ebene abweichen.

Dadurch kann vermieden werden, dass auf den Oberflächen abgestellte Objekte von den Oberflächen herunterrutschen oder Flüssigkeiten von den Oberflächen herunterfließen. Beispielsweise verläuft die jeweilige Oberfläche dabei parallel zum Boden. Die jeweilige Oberfläche ist beispielsweise eine Oberfläche eines im Innenraum angeordneten Tisches oder eines im Innenraum angeordneten Schranks. Es hat sich gezeigt, dass das Nivellieren eines Anhängers üblicherweise sehr anstrengend und zeitaufwendig ist.

Der AU 2017 100599 A4 ist eine Einrichtung zum Nivellieren einer transportierbaren Unterbringungsstruktur als bekannt zu entnehmen. Des Weiteren offenbart die US 2020/0355498 A1 ein System zum Nivellieren einer ausgewählten Oberfläche einer Struktur. Aus der EP 2 907 708 B1 ist ein Verfahren zum Ansteuern zumindest eines Antriebssystems bekannt. Außerdem offenbart die EP 3 135 569 A1 ein Verfahren zum Betreiben eines Hilfsantriebs für einen Anhänger.

Aufgabe der vorliegenden Erfindung ist es, ein Verfahren zu schaffen, mittels welchem ein Anhänger auf besonders einfache und zeitgünstige Weise nivelliert werden kann.

Diese Aufgabe wird erfindungsgemäß durch ein Verfahren mit den Merkmalen des Anspruchs 1 sowie durch ein Verfahren mit den Merkmalen des Anspruchs 9 gelöst. Vorteilhafte Ausgestaltungen mit zweckmäßigen Weiterbildungen der Erfindung sind in den übrigen Ansprüchen angegeben.

Ein erster Aspekt der Erfindung betrifft ein Verfahren zum Nivellieren eines Anhängers, insbesondere eines Wohnwagens, eines Bootsanhängers, eines Verkaufswagens, eines Transportanhängers, eines Autotransportanhängers oder eines anderen Anhängers. Das Nivellieren wird auch als Nivellierung bezeichnet. Unter dem Nivellieren ist im Rahmen der vorliegenden Offenbarung ein horizontales Ausrichten des Anhängers, insbesondere zumindest einer Oberfläche des Anhängers zu verstehen. Unter dem horizontalen Ausrichten des Anhängers, insbesondere der Oberfläche, ist zu verstehen, dass der Anhänger, insbesondere die Oberfläche, derart ausgerichtet oder positioniert wird, dass der Anhänger, insbesondere die Oberfläche, nicht oder möglichst wenig von der Horizontalen, das heißt von der horizontalen Ebene abweichen. Mit anderen Worten ist unter dem Nivellieren insbesondere zu verstehen, dass ein insbesondere etwaiger Unterschied zwischen dem Anhänger, insbesondere der Oberfläche, und der Horizontalen beziehungsweise der horizontalen Ebene zumindest reduziert oder aufgehoben wird. Bei der Oberfläche handelt es sich beispielsweise um eine in einem auch als Fahrgastzelle oder Fahrgastraum bezeichneten Innenraum des Anhängers angeordnete Oberfläche, wobei der Innenraum des Anhängers durch einen Aufbau des Anhängers begrenzt sein kann. Beispielsweise weist der Anhänger ein Fahrgestell auf. Beispielsweise ist der Aufbau separat von dem Fahrgestell ausgebildet und an dem Fahrgestell gehalten und somit durch das Fahrgestell getragen. Ganz insbesondere kann es sich bei dem Fahrgestell um einen Rahmen handeln. Insbesondere kann die Oberfläche eine im Innenraum angeordnete Oberfläche eines Bodens des Anhängers, insbesondere des Aufbaus, sein, wobei der Innenraum des Anhängers in einfach auch als Hochrichtung bezeichneter Fahrzeughochrichtung des Anhängers nach unten hin durch den Boden begrenzt ist. Ferner kann es sich bei der Oberfläche um eine in dem Innenraum angeordnete Oberfläche eines in dem Innenraum angeordneten Möbelstücks oder Einrichtungsgegenstands handeln, wobei das Möbelstück oder der Einrichtungsgegenstand beispielsweise ein Tisch oder ein Schrank ist. Beispielsweise kann es sich bei der Oberfläche um eine Arbeitsfläche oder um eine Oberfläche einer Arbeitsplatte handeln, wobei auf der Arbeitsfläche beziehungsweise auf der Arbeitsplatte Objekte abgestellt werden und/oder Arbeiten verrichtet werden können. Durch das Nivellieren des Anhängers kann beispielsweise vermieden werden, dass auf der Oberfläche abgestellte Objekte schwerkraftbedingt von der Oberfläche herab rutschen oder herabrollen oder unerwünschterweise auf der Oberfläche herum rutschen oder herum rollen. Ferner kann durch das Nivellieren beispielsweise vermieden werden, dass sich auf der Oberfläche befindende Flüssigkeiten schwerkraftbedingt von der Oberfläche herabfließen oder herabtropfen oder unerwünschterweise umherfließen und sich somit unerwünschterweise schwerkraftbedingt auf der Oberfläche übermäßig verteilen.

Bei dem Verfahren wird ein mobiles Endgerät verwendet, welches beispielsweise als ein mobiles Telekommunikationsendgerät ausgebildet sein kann. Das mobile Endgerät wird auch als erstes mobiles Endgerät bezeichnet. Wenn zuvor und im Folgenden von dem mobilen Endgerät die Rede ist, so ist darunter, falls nichts anderes angegeben ist, das erste mobile Endgerät zu verstehen. Beispielsweise weist das mobile Endgerät ein Mobilfunkmodul auf, mittels welchem das mobile Endgerät leitungslos, das heißt ohne eine körperliche beziehungsweise physisch vorhandene Leitung mit einem Mobilfunknetz verbunden oder verbindbar ist. Insbesondere kann es sich bei dem mobilen Endgerät um einen insbesondere mobilen, das heißt tragbaren PC (Personal Computer-persönlicher Computer) handeln, wobei der PC insbesondere einen auch als Tabletcomputer, Tablet-PC oder Flachrechner bezeichnetes Tablet sein kann. Dabei weist das mobile Endgerät wenigstens oder genau einen auch als elektrische oder elektronische Anzeige bezeichneten Bildschirm auf, welcher vorzugsweise als ein auch als Berührbildschirm oder Touchscreen bezeichneter, berührungsempfindlicher Bildschirm sein kann. Insbesondere ist im Rahmen der vorliegenden Offenbarung unter eine beziehungsweise dem zuvor genannten Mobilfunknetz eine technische Infrastruktur zu verstehen, über die oder auf der eine Übertragung von Signalen für Mobilfunk stattfindet. Insbesondere umfasst das Mobilfunknetz auch als Sendemasten bezeichnete Mobilfunkmasten, durch welche auch einfach als Funkzellen bezeichnete Zellen gebildet sind, die sich vorzugsweise gegenseitig überlappen. Insbesondere kann sich das mobile Endgerät mittels des Mobilfunkmoduls leitungslos mit der jeweiligen Funkzelle und somit über die jeweilige Funkzelle mit dem Mobilfunknetz verbinden, um beispielsweise über das Mobilfunknetz Daten beispielsweise mit wenigstens einer anderen, mit dem Mobilfunknetz verbundenen Recheneinheit auszutauschen. Wird beispielsweise das mobile Endgerät relativ zu der Erdoberfläche bewegt, beispielsweise derart, dass das mobile Endgerät aus einer ersten der Funkzellen herausbewegt und in eine zweite der Funkzellen hineinbewegt wird, so werden das Mobilfunkmodul und somit das mobile Endgerät von der ersten Zelle getrennt und mit der zweiten Zelle leitungslos verbunden. Dadurch kann das mobile Endgerät beispielsweise in einem Land, in welchem das Mobilfunknetz gebildet ist, große Strecken von beispielsweise 100 oder 1000 Kilometern relativ zu der Erdoberfläche umherbewegt werden, wobei das vorzugsweise als Mobilfunkgerät ausgebildete, mobile Endgerät mit dem Mobilfunknetz leitungslos verbunden bleibt, insbesondere dadurch, dass sich das Mobilfunkmodul abwechselnd von einer der Zellen trennt und mit einer anderen der Zellen leitungslos verbindet. Beispielsweise handelt es sich bei dem Mobilfunknetz um GSM (Global System for Mobile Communications), GPRS (General Packed Radio Service), UMTS (Universal Mobile Telecommunications System), LTE (Long Term Evolution) oder 5G. Ganz insbesondere ist es denkbar, dass das mobile Endgerät wenigstens einen auch als Schallwandler bezeichneten Lautsprecher zum Wiedergeben von insbesondere mit dem menschlichen Gehör akustisch wahrnehmbaren Tönen aufweist. Bei dem Verfahren kann beispielsweise das mobile Endgerät mittels des Mobilfunkmoduls leitungslos mit dem Mobilfunknetz verbunden sein oder das mobile Endgerät ist während des Verfahrens von dem Mobilfunknetz getrennt, jedoch weist in beiden Fällen das mobile Endgerät beispielsweise das Mobilfunkmodul auf, welches leitungslos mit dem Mobilfunknetz verbunden oder verbindbar ist.

Um das Fahrzeug besonders einfach, zeit- und kostengünstig und besonders komfortabel nivellieren zu können, ist es vorzugsweise vorgesehen, dass das mobile Endgerät dazu ausgebildet ist, in einem Zustand, in welchem das mobile Endgerät mittels des Mobilfunkmoduls leitungslos mit dem Mobilfunknetz verbunden ist, über das Mobilfunknetz eine Sprachkommunikation, das heißt ein Telefongespräch mit einem zweiten mobilen Endgerät durchzuführen. Somit ist es vorzugsweise vorgesehen, dass das erste mobile Endgerät ein auch als Handy bezeichnetes Mobiltelefon ist. Insbesondere ist erste mobile Endgerät ein so genanntes Smartphone (schlaues Telefon), mithin ein Mobiltelefon mit umfangreichen Computer-Funktionalitäten und - Konnektivitäten. Ganz vorzugsweise weist das erste mobile Endgerät wenigstens ein Mikrofon auf, mittels welchem die Sprachkommunikation durchgeführt werden kann. Insbesondere umfasst das erste mobile Endgerät den zuvor genannten Lautsprecher und das Mikrofon, welches zusätzlich zu dem Lautsprecher vorgesehen ist. Die Erfindung kann es somit vermeiden, ein nur für das Nivellieren des Anhängers vorgesehenes und hergestelltes Gerät zu verwenden. Stattdessen kann die Erfindung das auch für andere, von dem Nivellieren unterschiedliche Zwecke ausgebildete, vorgesehene und hergestellte und somit ohnehin hergestellte, erste mobile Endgerät, wodurch der Anhänger besonders komfortabel und kostengünstig nivelliert werden kann. Wenn zuvor und im Folgenden von dem mobilen Endgerät die Rede ist, so ist darunter, falls nichts anderes angegeben ist, das erste mobile Endgerät zu verstehen.

Bei dem Verfahren wird auf dem Bildschirm des mobilen Endgeräts in einem ersten Bereich des Bildschirms des mobilen Endgeräts eine grafische Darstellung angezeigt, welche mit dem Auge und somit von einer sich in einer Umgebung des mobilen Endgeräts aufhaltenden und den Bildschirm betrachtenden Person optisch wahrnehmbar ist. Die grafische Darstellung veranschaulicht eine Ausrichtung des Anhängers relativ zu einer beziehungsweise der zuvor genannten, horizontalen Ebene, so dass mittels der Darstellung der Person die insbesondere aktuelle Ausrichtung des Anhängers relativ zu der horizontalen Ebene optisch kommuniziert, mithin veranschaulicht wird. Beispielsweise ist es bei dem Verfahren vorgesehen, dass das mobile Endgerät auch als Ausrichtungsdaten bezeichnete Daten, insbesondere leitungslos und/oder über das Mobilfunknetz, empfängt. Wenn zuvor und im Folgenden die Rede von den Daten ist, so sind darunter, falls nichts anderes angegeben ist, die Ausrichtungsdaten zur verstehen. Die genannten Daten werden beispielsweise von einem insbesondere als mobiles Endgerät ausgebildeten und auch als Sendegerät bezeichneten Messgerät, insbesondere leitungslos und/oder über das Mobilfunknetz, bereitgestellt, wobei beispielsweise das Messgerät das zuvor genannte, zweite mobile Endgerät oder ein anderes, zusätzlich zu dem mobilen Endgerät und zusätzlich zu dem zweiten mobilen Endgerät vorgesehenes, drittes mobiles Endgerät sein kann. Somit werden beispielsweise die Daten von dem Messgerät an das mobile Endgerät gesendet. Unter dem Merkmal, dass mittels des Messgeräts die Daten an das mobile Endgerät gesendet werden, ist insbesondere zu verstehen, dass das Messgerät die Daten, insbesondere leitungslos, bereitstellt, insbesondere derart, dass das mobile Endgerät die Daten, insbesondere leitungslos, empfängt oder empfangen kann. Ganz vorzugsweise weist das mobile Endgerät wenigstens einen Prozessor auf, welcher auch als zentrale Recheneinheit oder Zentraleinheit (CPU - Central Processing Unit) bezeichnet wird oder ausgebildet sein kann. Insbesondere können die vorigen und folgenden Ausführungen zu dem mobilen Endgerät, das heißt zu dem ersten mobilen Endgerät ohne Weiteres auch auf das Messgerät, das zweite mobile Endgerät und das dritte mobile Endgerät übertragen werden und umgekehrt. Insbesondere ist oder umfasst der Prozessor eine elektronische Schaltung, mittels welcher eine Datenverarbeitung durchgeführt werden kann. Insbesondere sind der Prozessor und som it das mobile Endgerät dazu ausgebildet, ein auch als Computerprogramm oder Softwareprogramm bezeichnetes Programm, welches auch als App oder Applikation bezeichnet wird, auszuführen. Dabei ist es insbesondere vorgesehen, dass das Verfahren mittels des Programms durchgeführt wird, insbesondere dadurch, dass das Programm, welches beispielsweise in einem insbesondere elektrischen oder elektronischen Speicher des mobilen Endgeräts gespeichert ist, das mobile Endgerät betreibt, insbesondere steuert oder regelt, und dadurch veranlasst, das Verfahren durchzuführen oder auszuführen.

Beispielsweise beschreiben oder charakterisieren die Daten die insbesondere aktuelle Ausrichtung des Anhängers relativ zu der horizontalen Ebene. Dadurch, dass beispielsweise das mobile Endgerät die Daten, vorzugsweise leitungslos, empfängt, kann beispielsweise auf dem Bildschirm des mobilen Endgeräts die die insbesondere aktuelle Ausrichtung des Anhängers relativ zu der horizontalen Ebene veranschaulichende, grafische Darstellung auf dem Bildschirm und dabei in dem ersten Bereich des Bildschirms angezeigt werden. Beispielsweise können die Daten eine insbesondere aktuelle Abweichung der insbesondere aktuellen Ausrichtung des Anhängers von einer Soll-Ausrichtung und/oder relativ zu der horizontalen Ebene beschreiben, angeben oder charakterisieren. Dadurch, dass beispielsweise das Messgerät die Daten, vorzugsweise leitungslos, bereitstellt oder bereitstellen kann und hierdurch an das mobile Endgerät überträgt oder übertragen kann, ist es beispielsweise möglich, das Messgerät, insbesondere direkt, auf der zuvor genannten, zu nivellierenden Oberfläche anzuordnen, insbesondere derart, dass das Messgerät, insbesondere direkt, auf die Oberfläche gelegt und somit direkt an der Oberfläche abgestützt wird. Ferner ist es denkbar, dass das Messgerät an der Oberfläche angeordnet, insbesondere auf die Oberfläche aufgelegt, bleiben und dabei die Daten, insbesondere leitungslos, bereitstellen und insbesondere an das mobile Endgerät übermitteln kann, während beispielsweise die auch als Nutzer oder Nutzerin bezeichnete Person das vorzugsweise die Daten empfangende mobile Endgerät nutzt und hierbei insbesondere handhabt und/oder mit sich führt, insbesondere derart, dass sich die Person mit dem mobilen Endgerät relativ zu dem Anhänger und/oder relativ zu dem Messgerät bewegt, insbesondere während das Messgerät auf der Oberfläche angeordnet und insbesondere relativ zu der Oberfläche unbeweglich ist, mithin sich nicht relativ zu der Oberfläche bewegt. Somit kann sich die Person bedarfsgerecht und somit zumindest nahezu frei relativ zu dem Messgerät und insbesondere relativ zu dem Anhänger bewegen und dadurch beispielsweise eine Maßnahme ergreifen oder durchführen, um die etwaige Abweichung der insbesondere aktuellen Ausrichtung des Anhängers, insbesondere der Oberfläche, von der Soll-Ausrichtung zu verringern oder aufzuheben und/oder eine solche Maßnahme insbesondere optisch zu prüfen und/oder zu überwachen. Die Soll-Ausrichtung umfasst beispielsweise, dass die Oberfläche parallel zur horizontalen Ebene verläuft oder mit der horizontalen Ebene zusammenfällt, sodass beispielsweise die Person die Daten nutzen kann, um die genannte Maßnahme ergreifen oder durchführen zu können, um dadurch eine Abweichung der insbesondere aktuellen Ausrichtung des Anhängers, insbesondere der Oberfläche, von der horizontalen Ebene zumindest zu verringern oder aufzuheben. Die Person muss sich dabei nicht immer wieder zu dem Messgerät bewegen, um beispielsweise über das Messgerät die Daten zu prüfen oder zu analysieren, sondern die Person kann das mobile Endgerät mit sich führen oder handhaben oder tragen und mittels des mobilen Endgeräts die Daten nutzen, insbesondere analysieren oder prüfen, um die Abweichung zumindest zu verringern oder aufzuheben, insbesondere derart, dass die Person die Darstellung optisch wahrnehmen kann. Führt beispielsweise die genannte Maßnahme dazu, die etwaige Abweichung der aktuellen Ausrichtung des Fahrzeugs von der horizontalen Ebene zumindest zu verringern oder aufzuheben, so kann dies durch die Darstellung veranschaulicht und somit der Person optisch kommuniziert werden. Des Weiteren ist es bei dem erfindungsgemäßen Verfahren vorgesehen, dass auf dem Bildschirm des mobilen Endgeräts in jeweiligen, neben dem ersten Bereich und nebeneinander angeordneten, berührungsempfindlichen zweiten Bereichen des Bildschirms wenigstens zwei und höchstens vier Bedienelemente als Bedienflächen gleichzeitig angezeigt werden, wobei die die insbesondere aktuelle Ausrichtung des Anhängers relativ zu der horizontalen Ebene veranschaulichende Darstellung und die Bedienelemente gleichzeitig auf dem Bildschirm angezeigt werden. Die zweiten Bereiche werden auch als Bedienbereiche bezeichnet. Dabei werden die Darstellung und die Bedienelemente derart gleichzeitig auf dem Bildschirm angezeigt, dass die Bedienelemente und die Darstellung, insbesondere paarweise betrachtet, nebeneinander angeordnet sind. Somit sind die Bedienbereiche und der erste Bereich insbesondere paarweise betrachtet nebeneinander angeordnet. Durch Berühren der zweiten Bereiche durch eine Person ist ein zum Antreiben des Anhängers ausgebildeter, auch als Rangierantrieb bezeichneter Hilfsantrieb bedienbar, wodurch zum Nivellieren des Anhängers der Anhänger antreibbar ist. Dies bedeutet, dass die Person den Hilfsantrieb dadurch bedienen kann, dass die Person beispielsweise mit einem ihrer Finger den jeweiligen, zweiten Bereich berührt und hierdurch das jeweilige Bedienelement betätigt. Durch Bedienen des Hilfsantriebs treibt der Hilfsantrieb den Anhänger an, wobei durch dieses Antreiben des Anhängers der Anhänger nivelliert werden kann. Somit ist beispielsweise das aus dem Bedienen des Hilfsantriebs resultierende, mittels des Hilfsantriebs bewirkte Antreiben des Anhängers die zuvor genannte Maßnahme, um die etwaige Abweichung der insbesondere aktuellen Ausrichtung des Fahrzeugs, insbesondere der Oberfläche, von der Soll-Ausrichtung, zumindest zu verringern oder aufzuheben. Um beispielsweise die genannte Abweichung zu verringern oder aufzuheben, wird beispielsweise zumindest ein Teil des Anhängers, insbesondere zumindest ein Teilbereich des Aufbaus, relativ zu einer einfach auch als Untergrund oder Boden bezeichneten Untergrund- oder Bodenfläche bewegt, auf welcher der Anhänger steht beziehungsweise an welcher der Anhänger entlang seiner Fahrzeughochrichtung nach unten hin abgestützt ist. Durch das erfindungsgemäße Verfahren kann der Anhänger dadurch relativ zu dem Untergrund bewegt werden, dass der Anhänger mittels des Hilfsantriebs angetrieben und dadurch relativ zu dem Untergrund bewegt wird. Hierfür kann die Person den Hilfsantrieb bedienen, indem die Person den jeweiligen Bedienbereich berührt. Die etwaige Abweichung kann beispielsweise dadurch zumindest verringert oder aufgehoben werden, dass der Hilfsantrieb derart bedient wird, dass der Hilfsantrieb den Anhänger derart antreibt, dass beispielsweise der Anhänger auf wenigstens einen Keil gefahren wird, wobei beispielsweise zumindest der vorgenannte Teil des Anhängers in vertikaler Richtung nach oben bewegt und somit von dem Untergrund wegbewegt wird. Das erfindungsgemäße Verfahren ermöglicht es, der Person gleichzeitig die insbesondere aktuelle Ausrichtung des Anhängers relativ zu der horizontalen Ebene zu veranschaulichen und der Person die Bedienelemente und somit eine Möglichkeit bereitzustellen, den Hilfsantrieb zu bedienen und hierdurch den Anhänger anzutreiben. Bedient die Person mittels der Bedienelemente, das heißt durch Berühren der Bedienflächen, den Hilfsantrieb derart, dass der Hilfsantrieb den Anhänger derart antreibt, dass sich die insbesondere aktuelle Ausrichtung des Anhängers relativ zu der horizontalen Ebene ändert, so kann diese Änderung der Ausrichtung durch die Darstellung veranschaulicht werden, so dass die Person gleichzeitig den Hilfsantrieb mittels der Bedienelemente bedienen und die insbesondere aktuelle Ausrichtung des Anhängers und insbesondere eine etwaige Änderung der Ausrichtung des Anhängers optisch wahrnehmen kann. Dadurch kann die Person den Anhänger besonders komfortabel nivellieren. Da es erfindungsgemäß vorgesehen ist, dass eine Anzahl der auf dem Bildschirm angezeigten Bedienelemente wenigstens zwei und höchstens vier beträgt, kann der Person einerseits eine hinreichend umfangreiche Bedienung des Hilfsantriebs bereitgestellt werden, um den Anhänger bedarfsgerecht nivellieren zu können. Andererseits kann vermieden werden, dass die Person mit einer übermäßigen Anzahl von Bedienelementen und somit Bedienmöglichkeiten überfrachtet und somit überfordert wird, so dass das erfindungsgemäße Verfahren eine einfache, komfortable und zeitgünstige Nivellierung des Anhängers ermöglicht.

Das erfindungsgemäße Verfahren kann auch deswegen eine besonders einfache, kostengünstig und komfortable Nivellierung des Anhängers ermöglichen, da das Verfahren beispielsweise nicht eine speziell für das Nivellieren des Anhängers hergestellte und ausschließlich für das Nivellieren des Fahrzeugs ausgebildete oder verwendbare Einrichtung verwendet, sondern das erfindungsgemäße Verfahren kann beispielsweise das mobile Endgerät sowie vorzugsweise das Messgerät verwenden, welche vorzugsweise nicht nur zum Nivellieren des Fahrzeugs verwendbar sind, sondern auch leitungslos mit dem Mobilfunknetz verbunden und somit dazu genutzt werden können, um über das Mobilfunknetz leitungslos weitere Daten miteinander und/oder mit dem dritten mobilen Endgerät auszutauschen.

Um den Anhänger besonders einfach und komfortabel nivellieren zu können, ist es bei einer Ausführungsform der Erfindung vorgesehen, dass die Darstellung eine Neigung des Anhängers um dessen einfach auch als Längsrichtung bezeichnete Fahrzeuglängsrichtung bezüglich der horizontalen Ebene veranschaulicht. Wird der Anhänger beispielsweise entlang eines Bodens wie beispielsweise entlang des zuvor genannten Untergrunds gerade, insbesondere geradeaus gefahren, so dass eine Kurvenfahrt des Anhängers unterbleibt, so bewegt sich der Anhänger entlang seiner Fahrzeuglängsrichtung, mithin wird der Anhänger dann entlang seiner Fahrzeuglängsrichtung gefahren. Die Neigung des Anhängers um dessen Fahrzeuglängsrichtung wird auch als Neigung des Anhängers in einfach auch als Querrichtung bezeichnete Fahrzeugquerrichtung des Anhängers bezeichnet, dessen Fahrzeugquerrichtung senkrecht zur Fahrzeuglängsrichtung des Anhängers verläuft. Beispielsweise aufgrund von Unebenheiten des zuvor genannten Bodens, entlang welchem der Anhänger beispielsweise geradeaus gefahren werden kann, kann es beispielsweise zu einem Wanken des Anhängers, insbesondere des Aufbaus, kommen, wobei das Wanken um die Fahrzeuglängsrichtung des Anhängers erfolgt. Der Anhänger ist ein Langfahrzeug, wobei bei Wasser-, Luft- oder Raumfahrzeugen das Wanken auch als Rollen bezeichnet wird. Hintergrund dieser Ausführungsform ist insbesondere, dass insbesondere die Neigung des Anhängers in dessen Fahrzeuglängsrichtung eine wichtige Rolle für ein vorteilhaftes Nivellieren spielt, um beispielsweise in einem Innenraum angenehme und komfortable Bedingungen schaffen zu können.

Um dabei den Anhänger besonders einfach und komfortabel und zeitgünstig nivellieren zu können, ist es in weiterer Ausgestaltung der Erfindung vorgesehen, dass die Darstellung ausschließlich die Neigung des Anhängers in dessen Fahrzeuglängsrichtung bezüglich der horizontalen Ebene veranschaulicht. Dadurch kann eine Überfrachtung der Person mit Informationen vermieden werden, so dass die Person den Anhänger einfach und komfortabel nivellieren kann.

Um den Anhänger besonders einfach und somit komfortabel nivellieren zu können, ist es in weiterer Ausgestaltung der Erfindung vorgesehen, dass ein erstes der Bedienelemente dazu ausgebildet ist, eine gerade Vorwärtsfahrt des Anhängers, insbesondere entlang dessen Fahrzeuglängsrichtung, zu bewirken. Mit anderen Worten wird beispielsweise das erste Bedienelement in einem ersten der Bedienbereiche angezeigt. Durch Berühren des ersten Bedienbereichs durch die Person kann das erste Bedienelement betätigt, das heißt bedient werden, wobei beispielsweise durch Betätigen des ersten Bedienelements die gerade Vorwärtsfahrt des Anhängers bewirkt wird. Wieder mit anderen Worten ausgedrückt wird beispielsweise durch Betätigen des ersten Bedienelements der Hilfsantrieb derart bedient, dass der Hilfsantrieb die gerade Vorwärtsfahrt des Anhängers bewirkt, das heißt, dass der Hilfsantrieb den Anhänger derart antreibt, dass der Anhänger eine gerade Vorwärtsfahrt ausführt. Insbesondere ist es vorzugsweise vorgesehen, dass das erste Bedienelement dazu ausgebildet ist, durch bezogen auf die Bedienelemente alleiniges Betätigen des ersten Bedienelements die gerade Vorwärtsfahrt des Anhängers zu bewirken.

Als weiterhin besonders vorteilhaft hat es sich gezeigt, wenn ein zweites der Bedienelemente dazu ausgebildet ist, eine gerade Rückwärtsfahrt des Anhängers zu bewirken. Hierdurch kann der Anhänger besonders einfach komfortabel nivelliert werden. Mit anderen Worten wird beispielsweise das zweite Bedienelement in einem zweiten der Bedienbereiche angezeigt. Durch Berühren des zweiten Bedienbereichs durch die Person kann das zweite Bedienelement betätigt, das heißt bedient werden, wobei beispielsweise durch Betätigen des zweiten Bedienelements die gerade Rückwärtsfahrt des Anhängers bewirkt wird. Wieder mit anderen Worten ausgedrückt wird beispielsweise durch Betätigen des zweiten Bedienelements der Hilfsantrieb derart bedient, dass der Hilfsantrieb die gerade Rückwärtsfahrt des Anhängers bewirkt, das heißt, dass der Hilfsantrieb den Anhänger derart antreibt, dass der Anhänger eine gerade Rückwärtsfahrt ausführt. Insbesondere ist es vorzugsweise vorgesehen, dass das zweite Bedienelement dazu ausgebildet ist, durch bezogen auf die Bedienelemente alleiniges Betätigen des zweiten Bedienelements die gerade Rückwärtsfahrt des Anhängers zu bewirken.

Um eine besonders einfache Nivellierung des Anhängers zu realisieren, ist es weiterer Ausgestaltung der Erfindung vorgesehen, dass ein drittes der Bedienelemente dazu ausgebildet ist, eine Fahrt des Anhängers entlang einer auch als erste Kurve bezeichneten Linkskurve zu bewirken. Mit anderen Worten wird beispielsweise das dritte Bedienelement in einem dritten der Bedienbereiche angezeigt. Durch Berühren des dritten Bedienbereichs durch die Person kann das dritte Bedienelement betätigt, das heißt bedient werden, wobei beispielsweise durch Betätigen des dritten Bedienelements die Linkskurve des Anhängers bewirkt wird. Wieder mit anderen Worten ausgedrückt wird beispielsweise durch Betätigen des dritten Bedienelements der Hilfsantrieb derart bedient, dass der Hilfsantrieb die Linkskurve des Anhängers bewirkt, das heißt, dass der Hilfsantrieb den Anhänger derart antreibt, dass der Anhänger eine Linkskurve ausführt oder fährt. Insbesondere ist es vorzugsweise vorgesehen, dass das dritte Bedienelement dazu ausgebildet ist, durch bezogen auf die Bedienelemente alleiniges Betätigen des dritten Bedienelements die Linkskurve des Anhängers zu bewirken.

Ferner hat es sich als besonders vorteilhaft gezeigt, wenn ein viertes der Bedienelemente dazu ausgebildet ist, eine Fahrt des Anhängers entlang einer auch als zweite Kurve bezeichneten Rechtskurve zu bewirken. Somit ist die zweite Kurve gegensinnig zur ersten Kurve. Hierdurch kann der Anhänger besonders einfach nivelliert werden. Mit anderen Worten wird beispielsweise das vierte Bedienelement in einem vierten der Bedienbereiche angezeigt. Durch Berühren des vierten Bedienbereichs durch die Person kann das vierte Bedienelement betätigt, das heißt bedient werden, wobei beispielsweise durch Betätigen des vierte Bedienelements die Rechtskurve des Anhängers bewirkt wird.

Wieder mit anderen Worten ausgedrückt wird beispielsweise durch Betätigen des vierten Bedienelements der Hilfsantrieb derart bedient, dass der Hilfsantrieb die Rechtskurve des Anhängers bewirkt, das heißt, dass der Hilfsantrieb den Anhänger derart antreibt, dass der Anhänger eine Rechtskurve ausführt oder fährt. Insbesondere ist es vorzugsweise vorgesehen, dass das vierte Bedienelement dazu ausgebildet ist, durch bezogen auf die Bedienelemente alleiniges Betätigen des vierten Bedienelements die Rechtskurve des Anhängers zu bewirken.

Vorzugsweise weist der Anhänger wenigstens oder genau zwei Bodenkontaktelemente auf, über welche der Anhänger entlang seiner einfach auch als Hochrichtung bezeichneten Fahrzeughochrichtung nach unten hin an einem Boden, beispielsweise dem zuvor genannten Boden oder dem zuvor genannten Untergrund, abstützbar oder abgestützt ist. Insbesondere weist beispielsweise der Anhänger wenigstens oder genau eine einfach auch als Achse bezeichnete Fahrzeugachse auf, welche die Bodenkontaktelemente umfasst. Ferner ist es denkbar, dass der Anhänger wenigstens oder genau zwei einfach auch als Achsen bezeichnete Fahrzeugachsen aufweist, welche vorzugsweise in Fahrzeuglängsrichtung des Anhängers hintereinander und somit aufeinanderfolgend angeordnet sind. Dabei weist insbesondere die jeweilige Fahrzeugachse wenigstens oder genau zwei Bodenkontaktelemente auf, über welche der Anhänger entlang seiner Fahrzeughochrichtung nach unten hin an dem Boden abstützbar oder abgestützt ist. Insbesondere ist es denkbar, dass die Bodenkontaktelemente der jeweiligen Fahrzeugachse auf in Fahrzeugquerrichtung des Anhängers einander gegenüberliegenden Seiten des Anhängers angeordnet sind. Ganz insbesondere sind die Bodenkontaktelemente Fahrzeugräder, welche auch einfach als Räder bezeichnet werden und drehbar an dem Fahrgestell gehalten sind. Wird der Anhänger entlang des Bodens gefahren, während der Anhänger entlang seiner Fahrzeughochrichtung nach unten hin über die Bodenkontaktelemente an dem Boden abgestützt ist, so rollen die Bodenkontaktelemente, insbesondere direkt, an dem Boden ab.

Dabei hat es sich zur Realisierung einer besonders einfachen Nivellierung eines Anhängers als besonders vorteilhaft gezeigt, wenn durch Berühren des jeweiligen, zweiten Bereichs und somit durch Betätigen des jeweiligen Bedienelements der Hilfsantrieb wenigstens eines der drehbaren Bodenkontaktelemente des Anhängers antreibt und somit relativ zu dem Fahrgestell dreht und somit den Anhänger antreibt. Dadurch kann beispielsweise der Anhänger einfach und bedarfsgerecht auf den zuvor genannten Keil gefahren oder von dem Keil herabgefahren werden, um der Anhänger einfach und bedarfsgerecht nivellieren zu können.

Schließlich hat es sich als besonders vorteilhaft gezeigt, wenn wenigstens oder genau eines der Bedienelemente gegenüber den anderen, übrigen Bedienelementen, das heißt im Vergleich zu den anderen, übrigen Bedienelementen optisch hervorgehoben wird. Beispielsweise wird das wenigstens eine Bedienelement heller und/oder größer und/oder mit einer anderen Farbe angezeigt als die anderen, übrigen Bedienelemente angezeigt, und/oder das wenigstens eine Bedienelement wird mit einer, insbesondere farbigen, Umrandung versehen, während die anderen, übrigen Bedienelemente nicht mit einer Umrandung oder mit einer anderen Umrandung als das wenigstens eine Bedienelement versehen sind, und/oder das wenigstens eine Bedienelement wird stärker beleuchtet als die anderen, übrigen Bedienelemente oder das wenigstens eine Bedienelement wird beleuchtet, während eine Beleuchtung der anderen, übrigen Bedienelemente unterbleibt. Hierdurch kann beispielsweise die Person optisch darauf hingewiesen und dazu angeregt werden, das wenigstens eine Bedienelement zu betätigen, das heißt zu bedienen, um dadurch den Hilfsantrieb derart zu bedienen, dass der Hilfsantrieb den Anhänger derart antreibt, dass die Abweichung der Ausrichtung des Anhängers von der horizontale Ebene aufgehoben oder geringer wird.

Beispielsweise wird die insbesondere aktuelle Ausrichtung des Anhänger mittels einer insbesondere mobilen Erfassungseinrichtung erfasst. Die Erfassungseinrichtung stellt beispielsweise Messdaten bereit, die die erfasste Ausrichtung charakterisieren. Dabei wird in Abhängigkeit von den Messdaten die Darstellung auf der Anzeige angezeigt. IN Abhängigkeit von den Messdaten und dabei beispielsweise durch Vergleichen der erfassten Ausrichtung als Ist-Ausrichtung mit der Soll-Ausrichtung beziehungsweise durch Vergleichen der Messdaten als Ist-Daten mit die Soll-Ausrichtung charakterisierenden Soll-Daten kann die insbesondere aktuelle Abweichung ermittelt werden. In Abhängigkeit von der Abweichung kann eine Weise ermittelt werden, auf die der Hilfsantrieb den Anhänger anzutreiben hat, um die Abweichung zumindest zu verringern oder aufzuheben. Bei dem optische Hervorheben wird beispielsweise das Bedienelement optisch hervorgehoben, das zu bedienen ist, um dadurch den Hilfsantrieb derart zu bedienen, dass der Hilfsantrieb den Anhänger auf die oben genannten Weise, das heißt derart antreibt, dass die Abweichung der Ausrichtung des Anhängers von der horizontale Ebene aufgehoben oder geringer wird.

Ein zweiter Aspekt der Erfindung betrifft ein Verfahren zum Nivellieren eines Anhängers. Bei dem Verfahren gemäß dem zweiten Aspekt der Erfindung wird auf einem Bildschirm eines mobilen Endgeräts in einem ersten Bereich des Bildschirms eine Darstellung angezeigt, welche eine insbesondere aktuelle Ausrichtung des Anhängers relativ zu einer horizontalen Ebene veranschaulicht. Außerdem wird auf dem Bildschirm des mobilen Endgeräts in einem neben dem ersten Bereich angeordneten, berührungsempfindlichen zweiten Bereich des Bildschirms wenigstens oder genau ein Bedienelement als Bedienfläche angezeigt, wobei die insbesondere als grafische Darstellung ausgebildete Darstellung und das Bedienelement gleichzeitig und nebeneinander auf dem Bildschirm angezeigt werden. Bei dem zweiten Aspekt der Erfindung ist es vorgesehen, dass durch Berühren des zweiten Bereiches eine Person ein zum Antreiben des Anhängers ausgebildeter Hilfsantrieb den Anhänger so lange und nur so lange automatisch antreibt, bis eine Abweichung der Ausrichtung des Anhängers von der horizontalen Ebene, das heißt relativ zu der horizontalen Ebene aufgehoben oder geringer als ein vorgegebener, insbesondere von Null unterschiedlicher, ganz insbesondere gegenüber Null größerer, Grenzwert ist. Mit anderen Worten, eine sich in einer Umgebung des beispielsweise als mobiles Telekommunikationsendgerät ausgebildeten, mobilen Endgeräts aufhaltende Person kann beispielsweise mit einem ihrer Finger den zweiten Bereich berühren und dadurch das Bedienelement betätigen, wodurch der Hilfsantrieb den Anhänger so lange und nur so lange automatisch antreibt, bis die genannte Abweichung aufgehoben oder geringer als der Grenzwert ist. Vorteile und vorteilhafte Ausgestaltungen des ersten Aspekts der Erfindung sind als Vorteile und vorteilhafte Ausgestaltungen des zweiten Aspekts der Erfindung anzusehen und umgekehrt.

Der zweite Aspekt der Erfindung ermöglicht es, dass die Person, um den Anhänger zu nivellieren, nicht durch Bedienen des Hilfsantriebs und daraus resultierendem Antreiben des Anhängers unterschiedliche Fahrmanöver des Anhängers bewirken muss, sondern die Person kann einfach den zweiten Bereich berühren. Hierdurch veranlasst die Person den Hilfsantrieb, dass der Hilfsantrieb den Anhänger automatisch derart antreibt, dass die Abweichung aufgehoben oder geringer als der Grenzwert wird. Hierdurch kann der Anhänger besonders einfach, komfortabel und zeitgünstig nivelliert werden.

Um den Anhänger besonders sicher und somit einfach und komfortabel nivellieren zu können, ist es bei einer Ausführungsform des zweiten Aspekts der Erfindung vorgesehen, dass der Hilfsantrieb den Anhänger so lange und nur so lange automatisch antreibt, wie eine Berührung des zweiten Bereichs durch die Person erfolgt. Mit anderen Worten treibt der Hilfsantrieb den Anhänger so lange und nur so lange an, wie die Person den zweiten Bereich berührt und somit das Bedienelement bedient oder betätigt hält. Sobald beispielsweise die Person den zweiten Bereich nicht mehr berührt, das heißt, sobald eine oder die Berührung des zweiten Bereichs endet, endet das durch den Hilfsantrieb bewirkte Antreiben des Anhängers, so dass der Anhänger in seinen Stillstand kommt. Dadurch kann ein besonders sicherer Betrieb gewährleistet werden.

Eine weitere Ausführungsform des zweiten Aspekts zeichnet sich dadurch aus, dass das Bedienelement gegenüber wenigstens einem oder allen anderen, übrigen Bedienelementen, welche auf dem Bildschirm des mobilen Endgeräts angezeigt werden, optisch hervorgehoben wird. Beispielsweise wird das Bedienelement heller und/oder größer und/oder mit einer anderen Farbe angezeigt als das wenigstens eine andere, übrige Bedienelement angezeigt, und/oder das Bedienelement wird mit einer, insbesondere farbigen, Umrandung versehen, während das wenigstens eine andere, übrige Bedienelement nicht mit einer Umrandung oder mit einer anderen Umrandung als das Bedienelement versehen ist, und/oder das Bedienelement wird stärker beleuchtet als das wenigstens eine andere, übrige Bedienelement oder das Bedienelement wird beleuchtet, während eine Beleuchtung des wenigstens einen anderen, übrigen Bedienelement unterbleibt. Hierdurch kann beispielsweise die Person optisch darauf hingewiesen und dazu angeregt werden, das Bedienelement zu betätigen, das heißt zu bedienen, um dadurch den Hilfsantrieb zu bedienen.

Beispielsweise wird die insbesondere aktuelle Ausrichtung des Anhänger mittels einer insbesondere mobilen Erfassungseinrichtung erfasst. Die Erfassungseinrichtung stellt beispielsweise Messdaten bereit, die die erfasste Ausrichtung charakterisieren. Dabei wird in Abhängigkeit von den Messdaten die Darstellung auf der Anzeige angezeigt. IN Abhängigkeit von den Messdaten und dabei beispielsweise durch Vergleichen der erfassten Ausrichtung als Ist-Ausrichtung mit der Soll-Ausrichtung beziehungsweise durch Vergleichen der Messdaten als Ist-Daten mit die Soll-Ausrichtung charakterisierenden Soll-Daten kann die insbesondere aktuelle Abweichung ermittelt werden. In Abhängigkeit von der Abweichung kann eine Weise ermittelt werden, auf die der Hilfsantrieb den Anhänger anzutreiben hat, um die Abweichung zumindest zu verringern oder aufzuheben. Bei dem optische Hervorheben wird beispielsweise das Bedienelement optisch hervorgehoben, das zu bedienen ist, um dadurch den Hilfsantrieb derart zu bedienen, dass der Hilfsantrieb den Anhänger auf die oben genannten Weise, das heißt derart antreibt, dass die Abweichung der Ausrichtung des Anhängers von der horizontale Ebene aufgehoben oder geringer wird.

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig. 1: eine schematische Perspektivansicht eines als Wohnwagen ausgebildeten Anhängers; und
- Fig. 2: eine schematische Vorderansicht eines mobilen Endgeräts.

In den Figuren sind gleiche oder funktionsgleiche Elemente mit gleichen Bezugszeichen versehen.

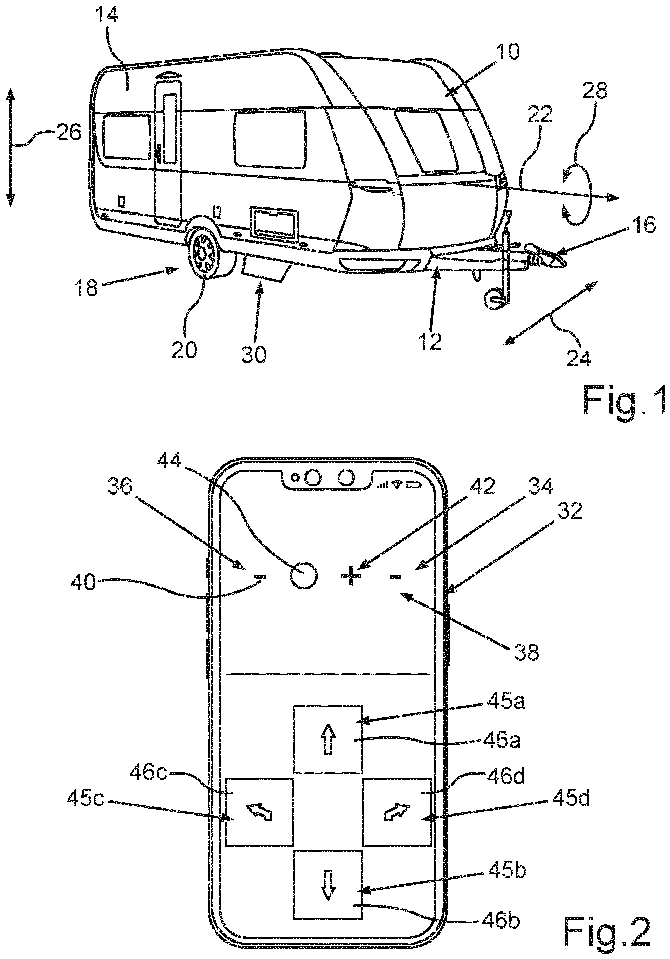

Fig. 1 zeigt in einer schematischen Perspektivansicht einen Anhänger 10 für ein Zugfahrzeug. Bei dem in den Figuren gezeigten Ausführungsbeispiel ist der Anhänger 10 als ein Wohnwagen ausgebildet. Der Anhänger 10 weist ein beispielsweise als Rahmen ausgebildetes Fahrgestell 12 und einen Aufbau 14 auf, welcher beispielsweise separat von dem Fahrgestell 12 ausgebildet und an dem Fahrgestell 12 befestigt und somit beispielsweise durch das Fahrgestell 12 getragen ist. Das Fahrgestell 12 weist eine Deichsel 16 auf, mittels welcher der Anhänger 10 gelenkig mit dem zuvor genannten Zugfahrzeug gekoppelt werden. Im gelenkig gekoppelten Zustand des Anhängers 10 kann der Anhänger 10 mittels des Zugfahrzeugs geschoben und gezogen und dadurch beispielsweise entlang eines Bodens, welcher auch als Untergrund bezeichnet wird, gefahren werden. Der Anhänger 10 weist wenigstens oder genau einfach auch als Achse bezeichnete Fahrzeugachse 18 auf, welche wenigstens oder genau zwei Bodenkontaktelemente 20 aufweist. Die Bodenkontaktelemente 20 sind auf in Fahrzeugquerrichtung des Anhängers 10 einander gegenüberliegenden Seiten des Anhängers 10 angeordnet, wobei die einfach auch als Querrichtung bezeichnete Fahrzeugquerrichtung des Anhängers 10, dessen einfach auch als Längsrichtung bezeichnete Fahrzeuglängsrichtung durch eine strichpunktierte Gerade 22 veranschaulicht ist. Die Fahrzeugquerrichtung des Anhängers 10 verläuft senkrecht zur Fahrzeuglängsrichtung des Anhängers 10, dessen Fahrzeughochrichtung durch einen Doppelpfeil 26 veranschaulicht ist und sowohl senkrecht zur Fahrzeuglängsrichtung des Anhängers 10 als auch senkrecht zur Fahrzeugquerrichtung des Anhängers 10 verläuft. Die einfach auch als Querrichtung bezeichnete Fahrzeugquerrichtung des Anhängers ist durch einen Doppelpfeil 24 veranschaulicht. Dabei ist der Anhänger 10 entlang seiner durch den Doppelpfeil 26 veranschaulichten Fahrzeughochrichtung nach unten hin über die Bodenkontaktelemente 20, insbesondere an dem Boden abstützbar oder abgestützt. Wird der Anhänger 10 entlang des Bodens gefahren, so rollen die Bodenkontaktelemente 20 direkt an dem Boden ab. Bei dem in den Figuren gezeigten Ausführungsbeispiel sind die Bodenkontaktelemente 20 Fahrzeugräder, welche auch einfach als Räder bezeichnet werden. Das jeweilige Bodenkontaktelement 20 ist drehbar an dem Fahrgestell 12 gehalten, so dass sich das jeweilige Bodenkontaktelement 20 relativ zu dem Fahrgestell 12 dreht, wenn der Anhänger 10 entlang des Bodens gefahren wird, während der Anhänger 10 entlang seiner Fahrzeughochrichtung nach unten über die Bodenkontaktelemente 20 an dem Boden abgestützt ist. Die Fahrzeuglängsrichtung des Anhängers 10 wird auch als x-Richtung oder mit x bezeichnet. In Fig. 1 ist durch einen Doppelpfeil 28 eine um die Fahrzeuglängsrichtung des Anhängers 10 herum verlaufende, auch als Drehrichtung oder Wankrichtung bezeichnete Richtung bezeichnet, entlang welcher beispielsweise der Anhänger 10, insbesondere der Aufbau 14, beispielsweise aufgrund von auch als Bodenunebenheiten bezeichneten Unebenheiten des Bodens wankt, wenn der Anhänger 10 entlang des Bodens gefahren wird.

Der Anhänger 10 ist mit einem in Fig. 1 besonders schematisch dargestellten Hilfsantrieb 30 ausgestattet, welcher auch als Rangierantrieb bezeichnet wird. Beispielsweise ist dem jeweiligen Bodenkontaktelement 20 ein jeweiliges Antriebselement des Hilfsantriebs 30 zugeordnet, wobei beispielsweise das jeweilige Antriebselement als eine jeweilige Antriebswalze ausgebildet sein kann. Dem jeweiligen Antriebselement ist das jeweilige Bodenkontaktelement 20 zugeordnet, welchem das jeweilige Antriebselement zugeordnet ist. Beispielsweise kann das jeweilige Antriebselement relativ zu dem jeweiligen, zugeordneten Bodenkontaktelement 20 zwischen wenigstens einer Gebrauchsstellung und wenigstens einer Nicht-Gebrauchsstellung, insbesondere translatorisch, bewegt werden. In der jeweiligen Gebrauchsstellung wirkt das jeweilige Antriebselement mit dem jeweils zugeordneten Bodenkontaktelement 20, insbesondere direkt, zusammen, beispielsweise derart, dass in der jeweiligen Gebrauchsstellung das jeweilige Antriebselement das jeweilige, zugeordnete Bodenkontaktelement 20, insbesondere direkt, berührt. In der jeweiligen nicht-Gebrauchsstellung unterbleibt ein Zusammenwirken des jeweiligen Antriebselements mit dem jeweiligen, zugeordneten Bodenkontaktelement 20, beispielsweise derart, dass das jeweilige Antriebselement in der jeweiligen nicht-Gebrauchsstellung von dem jeweils zugeordneten Bodenkontaktelement 20 beabstandet ist. Dem jeweiligen Antriebselement ist beispielsweise ein jeweiliger Motor, insbesondere Elektromotor, des Hilfsantriebs 30 zugeordnet. Das jeweilige Antriebselement ist beispielsweise mittels des jeweiligen, zugeordneten Motors antreibbar und dadurch insbesondere um eine jeweilige Walzendrehachse insbesondere relativ zu dem Fahrgestell 12 drehbar. Wird das jeweilige Antriebselement mittels des jeweils zugeordneten Motors angetrieben, während sich das jeweilige Antriebselement in Zusammenwirken mit dem jeweiligen, zugeordneten Bodenkontaktelement 20 befindet, so wird hierdurch das jeweilige Bodenkontaktelement 20 relativ zu dem Fahrgestell 12 gedreht. Wird nun beispielsweise zumindest eines der Bodenkontaktelemente 20 mittels des Hilfsantriebs 30 angetrieben, derart, dass das wenigstens eine Bodenkontaktelement 20 mittels des zugeordneten Motors des Hilfsantriebs 30 angetrieben wird, während der Anhänger 10 entlang seiner Fahrzeughochrichtung nach unten hin über die Bodenkontaktelemente 20 an dem Boden abgestützt ist, so wird der Anhänger 10 mittels des Hilfsantriebs 30 angetrieben und dabei relativ zu dem Boden bewegt. Hierdurch kann beispielsweise der Anhänger 10 mittels des Hilfsantriebs 30 bedarfsgerecht rangiert werden.

Durch den Aufbau 14 ist ein auch als Fahrgastraum bezeichneter Innenraum des Anhängers 10 gebildet, das heißt begrenzt. Dabei weist beispielsweise der Aufbau 14 einen auch als Aufbauboden bezeichneten Boden auf, durch welchen der Innenraum in Fahrzeughochrichtung des Anhängers 10 nach unten hin begrenzt ist. Beispielsweise weist der Boden eine dem Innenraum zugewandte, erste Oberfläche auf. In dem Innenraum sind beispielsweise Einrichtungsgegenstände angeordnet. Bei einem der Einrichtungsgegenstände kann es sich beispielsweise um einen Tisch handeln, welcher beispielsweise eine zweite Oberfläche aufweist. Beispielsweise ist die zweite Oberfläche von der ersten Oberfläche in Fahrzeughochrichtung des Anhängers hin nach oben hin abgewandt. Es ist denkbar, dass die Oberflächen parallel zueinander verlaufen. Um beispielsweise zu vermeiden, dass auf der zweiten Oberfläche abgestellte Gegenstände schwerkraftbedingt von der zweiten Oberfläche herabrutschen oder herabrollen, ist es wünschenswert, den Anhänger 10 und somit zumindest die zweite Oberfläche derart relativ zur Horizontalen, das heißt relativ zu einer horizontalen Oberfläche auszurichten, dass die vorzugsweise ebene, zweite Oberfläche parallel zur horizontalen Ebene verläuft oder dass eine Abweichung der zweiten Oberfläche von der horizontalen Ebene, mithin eine Abweichung einer Ausrichtung der zweiten Oberfläche relativ zu der horizontalen Ebene, so gering wie möglich ist. Dieses Ausrichten des Anhängers 10 relativ zur horizontalen Oberfläche wird auch als Nivellieren des Anhängers 10 bezeichnet.

Im Folgenden wird ein Verfahren zum Nivellieren des Anhängers 10 beschrieben. Bei dem Verfahren wird ein in Fig. 2 schematisch dargestelltes, mobiles Endgerät 32 verwendet, welches vorliegend als ein mobiles Telekommunikationsendgerät ausgebildet ist. Dies bedeutet, dass das mobile Endgerät 32, welches auch als erstes mobiles Endgerät bezeichnet wird, ein Mobilfunkmodul aufweist, mittels welchem das mobile Endgerät 32 leitungslos mit einem Mobilfunknetz verbunden oder verbindbar ist. Dabei ist das mobile Endgerät 32 dazu ausgebildet, in einem Zustand, in welchem das mobile Endgerät 32 mittels des Mobilfunkmoduls des mobilen Endgeräts 32 leitungslos mit dem Mobilfunknetz verbunden ist, über das Mobilfunknetz eine Sprachkommunikation mit einem in den Figuren nicht dargestellten, zweiten mobilen Endgerät durchzuführen. Das Mobilfunkmodul des mobilen Endgeräts 32 wird auch als erstes Mobilfunkmodul bezeichnet.

Das mobile Endgerät 32 weist einen Bildschirm 34 auf, welcher auch als Anzeige bezeichnet wird. Der Bildschirm 34 ist eine elektrische oder elektronische Anzeige. Außerdem ist der Bildschirm 34 ein berührungsempfindlicher Bildschirm, welcher auch als Touchscreen bezeichnet wird.

Bei dem zuvor genannten Verfahren wird auf dem Bildschirm 34 in einem ersten Bereich 36 des Bildschirms 34 eine grafische Darstellung 38 angezeigt, welche eine insbesondere aktuelle Ausrichtung des Anhängers 10 relativ zu der horizontalen Ebene veranschaulicht. Die Darstellung 38 umfasst bei dem in Fig. 2 gezeigten Ausführungsbeispiel beispielsweise eine insbesondere gestrichelte Gerade 40 und ein auf der Geraden 40 angeordnetes Kreuz 42 sowie einen vorliegend ausgefüllten Kreis 44. Insbesondere veranschaulicht die Darstellung 38 eine Neigung des Anhängers 10 um dessen Fahrzeuglängsrichtung (gestrichelte Gerade 22) bezüglich der horizontalen Ebene, vorliegend derart, dass die Darstellung 38 ausschließlich die Neigung des Anhängers 10 um dessen Fahrzeuglängsrichtung bezüglich der horizontalen Ebene veranschaulicht. Ist in der Darstellung 38 der Kreis 44 auf dem Kreuz 42 angeordnet, das heißt, liegt der Kreis 44 auf dem Kreuz 42, insbesondere derart, dass der Mittelpunkt des Kreises 44 auf dem Mittelpunkt des Kreuzes 42 liegt, so bedeutet dies, dass der Anhänger 10 horizontal ausgerichtet ist, mithin dass eine Abweichung der aktuellen Ausrichtung des Anhängers 10 von der horizontalen Ebene 0 ist. Ist jedoch der Kreis 44 beziehungsweise dessen Mittelpunkt von dem Kreuz 42 beziehungsweise von dessen Mittelpunkt beabstandet, wie es in Fig. 2 vorliegend der Fall ist, so weicht die aktuelle Ausrichtung des Anhängers 10 von der horizontalen Ebene ab. Beispielsweise veranschaulicht die Gerade 40 die Fahrzeugquerrichtung des Anhängers 10, so dass beispielsweise in Fig. 2 durch die Darstellung 38 veranschaulicht ist, dass aktuell der Anhänger 10 um seine Fahrzeugquerrichtung relativ zur horizontalen Ebene nach links geneigt ist. Um den Anhänger 10 horizontal auszurichten, müsste beispielsweise das linke Bodenkontaktelement 20 der Fahrzeugachse 18 angehoben und somit in Fahrzeughochrichtung des Anhängers 10 beziehungsweise vertikaler Richtung nach oben hin von dem Boden wegbewegt werden, insbesondere so stark oder so lange, bis der Kreis 44 beziehungsweise dessen Mittelpunkt auf dem Kreuz 42 beziehungsweise dessen Mittelpunkt zum Liegen kommt. Dies kann beispielsweise derart realisiert werden, dass der Anhänger 10 mittels des Hilfsantriebs 30 derart angetrieben wird, dass das linke Bodenkontaktelement 20 auf einen in den Figuren nicht dargestellten und auf dem Boden liegenden Keil hinaufgefahren wird.

Um beispielsweise die Ausrichtung des Anhängers 10 zu erfassen, das heißt zu messen, wird beispielsweise ein in den Figuren nicht gezeigtes, mobiles Messgerät verwendet, welches das zuvor genannte, zweite mobile Endgerät ist. Das zweite mobile Endgerät weist ein zweites Mobilfunkmodul auf, mittels welchem das zweite mobile Endgerät, mithin das Messgerät, leitungslos mit dem Mobilfunknetz verbunden oder verbindbar ist. Dabei ist das zweite mobile Endgerät (Messgerät) dazu ausgebildet, in einem Zustand, in welchem das zweite mobile Endgerät (Messgerät) mittels des zweiten Mobilfunkmoduls leitungslos mit dem Mobilfunknetz verbunden ist, über das Mobilfunknetz eine Sprachkommunikation mit dem ersten mobilen Endgerät 32 durchzuführen. Das Messgerät ist beispielsweise auf der genannten, zweiten Oberfläche angeordnet und m isst die insbesondere aktuelle Ausrichtung der zweiten Oberfläche und somit des Anhängers 10 relativ zur horizontalen Ebene. Das Messgerät stellt Daten, insbesondere leitungslos, bereit, welche die mittels des Messgeräts erfasste Ausrichtung der zweiten Oberfläche und somit des Anhängers 10 relativ zur Oberfläche charakterisieren. Die Daten werden mittels des mobilen Endgeräts 32 leitungslos empfangen. Insbesondere werden die Daten von dem zweiten mobilen Endgerät leitungslos an das erste mobile Endgerät 32 gesendet und durch das erste mobile Endgerät 32 leitungslos empfangen. Die grafische Darstellung 38 wird in Abhängigkeit von den empfangenen Daten auf den Bildschirm 34 in dem ersten Bereich 36 angezeigt, so dass die Darstellung 38 die aktuelle Ausrichtung der zweiten Oberfläche und somit des Anhängers 10 relativ zur horizontalen Ebene veranschaulicht.

Während die grafische Darstellung 38 auf dem Bildschirm 34 in dem ersten Bereich 36 des Bildschirms 34 angezeigt wird, werden außerdem auf dem Bildschirm 34 des ersten mobilen Endgeräts 32 in jeweiligen, neben dem ersten Bereich 36 und nebeneinander angeordneten, berührungsempfindlichen zweiten Bereichen 45a-d genau vier Bedienelemente 46a-d als Bedienflächen angezeigt. Dies bedeutet, dass die Bedienelemente 46a-d und die Darstellung 38 gleichzeitig auf dem Bildschirm 34 angezeigt werden. Die zweiten Bereiche 45a-d werden auch als Bedienbereiche bezeichnet. Somit wird das erste Bedienelement 46a in einem ersten der Bedienbereiche angezeigt, wobei der erste Bedienbereich der zweite Bereich 45a ist. Das zweite Bedienelement 46b wird in einem zweiten der Bedienbereiche angezeigt, wobei der zweite Bedienbereich der zweite Bereich 45b ist. Das dritte Bedienelement 46c wird in einem dritten der Bedienbereiche angezeigt, wobei der dritte Bedienbereich der zweite Bereich 45c ist. Das vierte Bedienelement 46d wird in dem vierten Bedienbereich angezeigt, wobei der vierte Bedienbereich der zweite Bereich 45d ist. Die Bedienbereiche sind, insbesondere paarweise, nebeneinander angeordnet und außerdem ist der jeweilige Bedienbereich neben dem ersten Bereich 36 angeordnet. Durch Berühren der Bedienbereiche durch eine Person ist der zum Antreiben des Anhängers 10 ausgebildete Hilfsantrieb 30 bedienbar, wodurch zum Nivellieren des Anhängers 10 der Anhänger 10 antreibbar ist. Mit anderen Worten kann die zuvor genannte Person beispielsweise mit einem ihrer Finger den jeweiligen Bedienbereich berühren und dadurch das jeweilige, in dem jeweiligen Bedienbereich angeordnete Bedienelement 46a-d betätigen. Durch Betätigen des jeweiligen Bedienelements 46a-d wird der Hilfsantrieb 30 bedient, derart, dass der Hilfsantrieb 30 wenigstens eines der Bodenkontaktelemente 20 und dadurch den Anhänger 10 antreibt. Da die Darstellung 38 und die Bedienelemente 46a-d gleichzeitig auf dem Bildschirm 34 angezeigt werden, kann die Person den Hilfsantrieb 30 mittels der Bedienelemente 46a-d bedienen und gleichzeitig die grafische Darstellung 38 optisch wahrnehmen, mithin die aktuelle Ausrichtung des Anhängers 10 beziehungsweise der zweiten Oberfläche relativ zur horizontalen Ebene optisch wahrnehmen. Da beispielsweise durch das mittels des Hilfsantriebs 30 bewirkte und aus dem Bedienen des Hilfsantriebs 30 resultierende Antreiben des Anhängers 10 die aktuelle Ausrichtung des Anhängers 10 relativ zur horizontalen Oberfläche ändert, wobei diese Änderung der Ausrichtung des Anhängers 10 relativ zur horizontalen Ebene durch die grafische Darstellung 38 veranschaulicht wird, kann die Person den Hilfsantrieb 30 bedienen und dadurch den Anhänger 10 rangieren, und gleichzeitig kann die Person die aus dem Rangieren des Anhängers 10 resultierende Änderung der aktuellen Ausrichtung des Anhängers 10 relativ zur horizontalen Ebene optisch wahrnehmen, dadurch, dass die Person die grafische Darstellung 38 optisch wahrnehmen kann. Dadurch kann die Person den Anhänger 10 einfach, komfortabel und bedarfsgerecht rangieren und somit nivellieren.

## Patentansprüche

1. Verfahren zum Nivellieren eines Anhängers (10), bei welchem gleichzeitig:
- auf einem Bildschirm (34) eines mobilen Endgeräts (32) in einem ersten Bereich (36) des Bildschirms (34) eine Darstellung (38) angezeigt wird, welche eine Ausrichtung des Anhängers (10) relativ zu einer horizontalen Ebene veranschaulicht; und
- auf dem Bildschirm (34) des mobilen Endgeräts (32) in jeweiligen, neben dem ersten Bereich (36) und nebeneinander angeordneten, berührungsempfindlichen zweiten Bereichen (45a-d) des Bildschirms (34) wenigstens zwei und höchstens vier Bedienelemente (46a-d) als Bedienflächen angezeigt werden, wobei durch Berühren der zweiten Bereiche (45a-d) durch eine Person ein zum Antreiben des Anhängers (10) ausgebildeter Hilfsantrieb (30) bedienbar ist, wodurch zum Nivellieren des Anhängers (10) der Anhänger (10) antreibbar ist.

2. Verfahren nach Anspruch 1,
**dadurch gekennzeichnet, dass**
die Darstellung (38) eine Neigung des Anhängers (10) um dessen Fahrzeuglängsrichtung (22) bezüglich der horizontalen Ebene veranschaulicht.

3. Verfahren nach Anspruch 2,
**dadurch gekennzeichnet, dass**
die Darstellung ausschließlich die Neigung des Anhängers (10) um dessen Fahrzeuglängsrichtung (22) bezüglich der horizontalen Ebene veranschaulicht.

4. Verfahren nach einem der vorhergehenden Ansprüche,
**dadurch gekennzeichnet, dass**
ein erstes der Bedienelemente (46a-d) dazu ausgebildet ist, eine gerade Vorwärtsfahrt des Anhängers (10) zu bewirken.

5. Verfahren nach einem der vorhergehenden Ansprüche,
**dadurch gekennzeichnet, dass**
ein zweites der Bedienelemente (46a-d) dazu ausgebildet ist, eine gerade Rückwärtsfahrt des Anhängers (10) zu bewirken.

6. Verfahren nach einem der vorhergehenden Ansprüche,
**dadurch gekennzeichnet, dass**
ein drittes der Bedienelemente (46a-d) dazu ausgebildet ist, eine Fahrt des Anhängers (10) entlang einer Linkskurve zu bewirken.

7. Verfahren nach einem der vorhergehenden Ansprüche,
**dadurch gekennzeichnet, dass**
ein viertes der Bedienelemente (46a-d) dazu ausgebildet ist, eine Fahrt des Anhängers (10) entlang einer Rechtskurve zu bewirken.

8. Verfahren nach einem der vorhergehenden Ansprüche,
**dadurch gekennzeichnet, dass**
wenigstens oder genau eines der Bedienelemente (46a-d) gegenüber den anderen, übrigen Bedienelementen (46a-d) optisch hervorgehoben wird.

9. Verfahren zum Nivellieren eines Anhängers (10), bei welchem gleichzeitig:
- auf einem Bildschirm (34) eines mobilen Endgeräts (32) in einem ersten Bereich (36) des Bildschirms (34) eine Darstellung (38) angezeigt wird, welche eine Ausrichtung des Anhängers (10) relativ zu einer horizontalen Ebene veranschaulicht; und
- auf dem Bildschirm (34) des mobilen Endgeräts (32) in einem neben dem ersten Bereich (36) angeordneten, berührungsempfindlichen zweiten Bereich (45a) des Bildschirms (34) ein Bedienelement (46a) als Bedienfläche angezeigt wird, wobei durch Berühren des zweiten Bereiches (45a) durch eine Person ein zum Antreiben des Anhängers (10) ausgebildeter Hilfsantrieb (30) den Anhänger (10) solange und nur solange automatisch antreibt, bis eine Abweichung der Ausrichtung des Anhängers (10) von der horizontale Ebene aufgehoben oder geringer als ein vorgegebener Grenzwert ist.

10. Verfahren nach Anspruch 9,
**dadurch gekennzeichnet, dass**
der Hilfsantrieb (30) den Anhänger (10) solange und nur solange automatisch antreibt, wie eine Berührung des zweiten Bereiches (45a) durch die Person erfolgt.
